# EUROPÄISCHE PATENTSCHRIFT

(11) **EP 2 791 530 B1**
(45) Veröffentlichungstag und Bekanntmachung des Hinweises auf die Patenterteilung: **21.02.2018**
(21) Anmeldenummer: 12821241.2
(22) Anmeldetag: 04.12.2012
(51) Int. Cl.: F16D 28/00, B60K 6/387

(54) **Elektrische Maschine**
Electric machine
Moteur électrique

(30) Priorität: 14.12.2011 DE 102011088473
(43) Veröffentlichungstag der Anmeldung: 22.10.2014
(73) Patentinhaber: Schaeffler Technologies AG & Co. KG, 91074 Herzogenaurach (DE)
(72) Erfinder: HELMER, Daniel, 77855 Achern-Fautenbach (DE); VOGEL, Florian, 77815 Bühl (DE); RABER, Christoph, 66564 Ottweiler-Steinbach (DE)
(86) Internationale Anmeldenummer: PCT/DE2012/001154
(87) Internationale Veröffentlichungsnummer: WO 2013/087055

(56) Entgegenhaltungen:
- EP-A2- 0 677 414
- DE-C1- 3 834 555
- US-A1- 2004 084 979

## Beschreibung

Die Erfindung betrifft eine elektrische Maschine mit einem Stator und einem Rotor sowie einer Kupplungseinrichtung und einer Betätigungseinrichtung, die in den Rotor integriert sind, für einen Antriebsstrang eines Kraftfahrzeugs gemäß dem Oberbegriff des Patentanspruchs 1.

Aus der DE 10 2010 048 830 A1 ist ein Kupplungsaggregat bekannt in einem Antriebsstrang eines Kraftfahrzeugs mit einer Brennkraftmaschine mit einer Kurbelwelle und einem Getriebe mit einer Getriebeeingangswelle mit einer ersten Reibungskupplung enthaltend eine erste Gegendruckplatte und eine axial verlagerbar und drehfest an der ersten Gegendruckplatte aufgenommene erste Anpressplatte, die von einer Tellerfeder gegen die erste Gegendruckplatte unter Zwischenlegung von Reibbelägen einer ersten, mit der Getriebeeingangswelle drehfest verbundenen Kupplungsscheibe verspannt wird, und mit einer zweiten Reibungskupplung enthaltend eine zweite Gegendruckplatte und eine axial verlagerbar und drehfest an der zweiten Gegendruckplatte aufgenommene Anpressplatte, die in Richtung der zweiten Gegendruckplatte unter Zwischenlegung von Reibbelägen einer zweiten, mit der Getriebeeingangswelle verbundenen Kupplungsscheibe verspannbar ist, bei dem die zweite Gegendruckplatte wirksam mit der Kurbelwelle verbunden, die erste Gegendruckplatte auf der zweiten Gegendruckplatte verdrehbar gelagert und zwischen der ersten Gegendruckplatte und der zweiten Anpressplatte eine axial wirksame Rampeneinrichtung angeordnet ist, um eine vergrößerte Kapazität an übertragbarem Moment mit geringer Betätigungskraft bereitzustellen. Zur genaueren Information über die Merkmale der vorliegenden Erfindung wird ausdrücklich auf die Veröffentlichung DE 10 2010 048 830 A1 verwiesen. Die Lehre dieser Veröffentlichung ist als Bestandteil des vorliegenden Dokuments anzusehen. Merkmale dieser Veröffentlichung sind Merkmale des vorliegenden Dokuments.

Aus der DE 10 2008 006 062 A1 ist ein Antriebsstrang bekannt in einem Kraftfahrzeug mit einem Verbrennungsmotor und einem Starter-Generator, wobei mittels einer in Öl laufenden Anfahrkupplung die Drehverbindung im Kraftfluss zwischen dem Verbrennungsmotor einerseits, und dem Starter-Generator und dem Getriebe andererseits, hergestellt werden kann, bei dem der Rotor des Starter- Generators - zumindest mittelbar - an einem Kupplungsdeckel gelagert ist und dass der Kupplungsdeckel drehfest und öldicht mit der Kupplungsglocke des Getriebes verbunden ist, um den Antriebsstrang kostengünstiger und platzsparender zu gestalten.

Eine elektrische Maschine mit einem Stator und einem Rotor sowie einer Kupplungseinrichtung und einer Betätigungseinrichtung, die in den Rotor integriert sind, für einen Antriebsstrang eines Kraftfahrzeugs gemäß dem Oberbegriff des Patentanspruchs 1 ist aus der US 2004/0084979 A1 bekannt..

Der Erfindung liegt die Aufgabe zugrunde, eine eingangs genannte elektrische Maschine baulich und/oder funktional zu verbessern.

Erfindungsgemäß gelöst wird diese Aufgabe durch eine elektrische Maschine mit einem Stator und einem Rotor sowie einer Kupplungseinrichtung und einer Betätigungseinrichtung, die in den Rotor integriert sind, für einen Antriebsstrang eines Kraftfahrzeugs gemäß Patentanspruch 1. Bevorzugte Ausführungsbeispiele sind in den abhängigen Patentansprüchen dargelegt.

Die Kupplungseinrichtung ist in dem Antriebsstrang vorzugsweise zwischen der Brennkraftmaschine einerseits und der elektrischen Maschine sowie der Getriebeeinrichtung andererseits angeordnet, wobei die Kupplungseinrichtung und die Betätigungseinrichtung in den Rotor der elektrischen Maschine integriert sind.

In dem Antriebsstrang können die Brennkraftmaschine, die Kupplungseinrichtung, die elektrische Maschine und die Getriebeeinrichtung in der genannten Reihenfolge angeordnet sein. In dem Antriebsstrang kann ein Drehschwingungsdämpfer, insbesondere ein Zweimassenschwungrad, angeordnet sein. Der Drehschwingungsdämpfer kann ein Eingangsteil, ein zu dem Eingangsteil relativ verdrehbares Ausgangsteil und wenigstens einen zwischen dem Eingangsteil und dem Ausgangsteil wirksamen Energiespeicher aufweisen. Die Bezeichnungen "Eingangsteil" und "Ausgangsteil" sind auf einen von der Brennkraftmaschine ausgehenden Leistungsfluss bezogen. Der Drehschwingungsdämpfer kann in dem Antriebsstrang zwischen der Brennkraftmaschine und der Kupplungseinrichtung angeordnet sein. Der Drehschwingungsdämpfer kann in dem Antriebsstrang zwischen der Brennkraftmaschine und der elektrische Maschine angeordnet sein. Das Eingangsteil des Drehschwingungsdämpfers kann mit der Brennkraftmaschine antriebsverbunden sein. Das Ausgangsteil des Drehschwingungsdämpfers kann mit der Kupplungseinrichtung antriebsverbunden sein. Das Ausgangsteil des Drehschwingungsdämpfers kann mit der elektrischen Maschine antriebsverbunden sein. In dem Antriebsstrang kann wenigstens ein antreibbares Rad angeordnet sein. Das wenigstens eine antreibbare Rad kann in dem Antriebsstrang der Getriebeeinrichtung nachfolgend angeordnet sein.

Das Kraftfahrzeug kann einen Hybridantrieb aufweisen. Das Kraftfahrzeug kann einen ersten Energieumwandler aufweisen. Der erste Energieumwandler kann die Brennkraftmaschine sein. Die Brennkraftmaschine kann mit einem Kohlenwasserstoff, wie Benzin, Diesel oder Erdgas (Liquefied Petroleum Gas, LPG oder Compressed Natural Gas, CNG) betreibbar sein. Die Brennkraftmaschine kann mit Wasserstoff betreibbar sein. Das Kraftfahrzeug kann einen ersten Energiespeicher aufweisen. Der erste Energiespeicher kann ein Kraftstofftank sein. Das Kraftfahrzeug kann einen zweiten Energieumwandler aufweisen. Der zweite Energieumwandler kann die elektrische Maschine sein. Die elektrische Maschine kann als Elektromotor betreibbar sein. Die elektrische Maschine kann als Generator betreibbar sein. Die elektrische Maschine kann einen Elektromotor und einen Generator baulich vereinigen. Die elektrische Maschine kann ein Starter-Generator sein. Das Kraftfahrzeug kann einen zweiten Energiespeicher aufweisen. Der zweite Energiespeicher kann ein elektrischer Energiespeicher sein. Der zweite Energiespeicher kann ein Akkumulator sein. Die Energieumwandler können zum Antrieb des Kraftfahrzeugs dienen. Mithilfe der Energieumwandler kann eine mechanische Leistung erzeugbar sein. Das Kraftfahrzeug kann einen parallelen Hybridantrieb aufweisen. Das Kraftfahrzeug kann einen Vollhybridantrieb aufweisen.

Die Kupplungseinrichtung kann eine Reibungskupplung aufweisen. Die Kupplungseinrichtung kann eine trockene Kupplung aufweisen. Die Kupplungseinrichtung kann eine Einscheibenkupplung aufweisen. Die Kupplungseinrichtung kann eine nasse Kupplung aufweisen. Die Kupplungseinrichtung kann eine Mehrscheibenkupplung aufweisen. Die Kupplungseinrichtung kann eine Anpressplatte aufweisen. Die Kupplungseinrichtung kann wenigstens eine Zwischendruckplatte aufweisen. Die Kupplungseinrichtung kann eine Druckplatte aufweisen. Die Kupplungseinrichtung kann wenigstens eine Kupplungsscheibe aufweisen. Die wenigstens eine Kupplungsscheibe kann Reibbeläge aufweisen. Es können Zwischendruckplatten und Kupplungsscheiben abwechselnd angeordnet sein. Die wenigstens eine Kupplungsscheibe kann zwischen der Anpressplatte, der wenigstens einen Zwischendruckplatte und/oder der Druckplatte einklemmbar sein.

Die Kupplungseinrichtung kann in dem Antriebsstrang zwischen der Brennkraftmaschine und der elektrischen Maschine angeordnet sein. Die Kupplungseinrichtung kann in dem Antriebsstrang zwischen der Brennkraftmaschine und dem Rotor der elektrischen Maschine angeordnet sein. Die Kupplungseinrichtung kann ein Eingangsteil und ein Ausgangsteil aufweisen. Die Bezeichnungen "Eingangsteil" und "Ausgangsteil" sind auf einen zu einem antreibbaren Rad des Kraftfahrzeugs hin gerichteten Leistungsfluss bezogen. Das Eingangsteil der Kupplungseinrichtung kann die wenigstens eine Kupplungsscheibe aufweisen. Das Eingangsteil der Kupplungseinrichtung kann mit der Brennkraftmaschine antriebsverbunden sein. Das Ausgangsteil der Kupplungseinrichtung kann die Anpressplatte, die wenigstens eine Zwischendruckplatte und/oder die Druckplatte aufweisen. Das Ausgangsteil der Kupplungseinrichtung kann mit der elektrischen Maschine antriebsverbunden sein. Das Ausgangsteil der Kupplungseinrichtung kann mit dem Rotor der elektrischen Maschine antriebsverbunden sein. Die Kupplungseinrichtung kann in dem Antriebsstrang zwischen der Brennkraftmaschine und der Getriebeeinrichtung angeordnet sein. Das Ausgangsteil der Kupplungseinrichtung kann mit der Getriebeeinrichtung antriebsverbunden sein. Das Ausgangsteil der Kupplungseinrichtung kann mit einer Eingangswelle der Getriebeeinrichtung antriebsverbunden sein. Die Kupplungseinrichtung kann in dem Antriebsstrang zwischen dem Drehschwingungsdämpfer und der elektrischen Maschine angeordnet sein. Das Eingangsteil der Kupplungseinrichtung kann mit dem Drehschwingungsdämpfer antriebsverbunden sein. Das Eingangsteil der Kupplungseinrichtung kann mit dem Ausgangsteil des Drehschwingungsdämpfers antriebsverbunden sein. Die Kupplungseinrichtung kann in dem Antriebsstrang zwischen dem Drehschwingungsdämpfer und der Getriebeeinrichtung angeordnet sein.

Die Kupplungseinrichtung kann ausgehend von einer vollständig ausgerückten Betätigungsstellung, in der zwischen dem Eingangsteil und dem wenigstens einen Ausgangsteil im Wesentlichen keine Kraftübertragung erfolgt, bis hin zu einer vollständig eingerückten Betätigungsstellung, in der zwischen dem Eingangsteil und dem wenigstens einen Ausgangsteil im Wesentlichen eine vollständige Kraftübertragung erfolgt, betätigungsabhängig eine zunehmende Kraftübertragung ermöglichen, wobei eine Kraftübertragung zwischen dem Eingangsteil und dem wenigstens einen Ausgangsteil kraftschlüssig, insbesondere reibschlüssig, erfolgen kann. Umgekehrt kann ausgehend von einer vollständig eingerückten Betätigungsstellung, in der zwischen dem Eingangsteil und dem wenigstens einen Ausgangsteil im Wesentlichen eine vollständige Kraftübertragung erfolgt, bis hin zu einer vollständig ausgerückten Betätigungsstellung, in der zwischen dem Eingangsteil und dem wenigstens einen Ausgangsteil im Wesentlichen keine Kraftübertragung erfolgt, betätigungsabhängig eine abnehmende Kraftübertragung ermöglicht sein. Eine vollständig eingerückte Betätigungsstellung kann eine geschlossene Betätigungsstellung sein. Eine vollständig ausgerückte Betätigungsstellung kann eine offene Betätigungsstellung sein.

Die Kupplungseinrichtung kann einen Momentfühler aufweisen. Der Momentfühler kann an dem Eingangsteil der Kupplungseinrichtung angeordnet sein. Der Momentfühler kann ein Eingangsteil, ein zu dem Eingangsteil relativ verdrehbares Ausgangsteil und wenigstens einen zwischen dem Eingangsteil und dem Ausgangsteil wirksamen Energiespeicher aufweisen. Ein Moment kann aufgrund einer Relativverdrehung zwischen dem Eingangsteil und dem Ausgangsteil entgegen einer Kraft des Energiespeichers bestimmbar sein. Mithilfe des Momentfühlers kann eine Regelung der Kupplungseinrichtung erfolgen.

Die Getriebeeinrichtung kann eine Eingangswelle und eine Ausgangswelle aufweisen. Die Bezeichnungen "Eingangswelle" und "Ausgangswelle" sind auf einen von der Brennkraftmaschine oder von der elektrischen Maschine ausgehenden Leistungsfluss bezogen. Die Getriebeeinrichtung kann ein Stufengetriebe aufweisen. Die Getriebeeinrichtung kann ein stufenloses Getriebe aufweisen. Die Getriebeeinrichtung kann ein Doppelkupplungsgetriebe aufweisen. Die Getriebeeinrichtung kann ein Wandlerschaltkupplungsgetriebe aufweisen. Die Getriebeeinrichtung kann manuell schaltbar sein. Die Getriebeeinrichtung kann automatisiert schaltbar sein. Die Eingangswelle kann mit der elektrischen Maschine antriebsverbunden sein. Die Eingangswelle kann mit dem Rotor der elektrischen Maschine antriebsverbunden sein. Die Eingangswelle kann mit der Kupplungseinrichtung antriebsverbunden sein. Die Eingangswelle kann mit dem Ausgangsteil der Kupplungseinrichtung antriebsverbunden sein. Die Ausgangswelle kann mit dem wenigstens einen antreibbaren Rad antriebsverbunden sein.

Die elektrische Maschine kann ein Gehäuse aufweisen. Der Stator kann zu dem Gehäuse fest angeordnet sein. Der Stator kann radial außerhalb des Rotors angeordnet sein. Die elektrische Maschine kann wenigstens eine Welle oder Nabe aufweisen. Der Rotor kann an der wenigstens einen Welle oder Nabe fest angeordnet sein. Der Rotor kann radial innerhalb des Stators angeordnet sein. Die elektrische Maschine kann eine erste Welle oder Nabe und eine zweite Welle oder Nabe aufweisen. Die erste Welle oder Nabe und die zweite Welle oder Nabe können koaxial angeordnet sein. Der Rotor kann an der zweiten Welle oder Nabe fest angeordnet sein. Die erste Welle oder Nabe kann dem Eingangsteil der Kupplungseinrichtung zugeordnet sein. Die zweite Welle oder Nabe kann dem Ausgangsteil der Kupplungseinrichtung zugeordnet sein. Der Rotor kann eine hülsenartige Form aufweisen. Der Rotor kann eine rohrabschnittartige Form aufweisen. Der Rotor kann eine hohlzylindrische Form aufweisen. In dem Rotor kann ein Aufnahmeraum gebildet sein.

Eine in den Rotor integrierte Kupplungseinrichtung kann eine Kupplungseinrichtung sein, die zumindest im Wesentlichen innerhalb des Rotors angeordnet ist. Eine in den Rotor integrierte Kupplungseinrichtung kann eine Kupplungseinrichtung sein, die radial zumindest im Wesentlichen innerhalb des Rotors angeordnet ist. Eine radiale Richtung ist eine zu einer Drehachse der elektrischen Maschine senkrechte Richtung. Eine in den Rotor integrierte Kupplungseinrichtung kann eine Kupplungseinrichtung sein, die axial zumindest im Wesentlichen innerhalb des Rotors angeordnet ist. Eine axiale Richtung ist eine Erstreckungsrichtung einer Drehachse der elektrischen Maschine. Eine in den Rotor integrierte Betätigungseinrichtung kann eine Betätigungseinrichtung sein, die zumindest im Wesentlichen innerhalb des Rotors angeordnet ist. Eine in den Rotor integrierte Betätigungseinrichtung kann eine Betätigungseinrichtung sein, die radial zumindest im Wesentlichen innerhalb des Rotors angeordnet ist. Eine in den Rotor integrierte Betätigungseinrichtung kann eine Betätigungseinrichtung sein, die axial zumindest im Wesentlichen innerhalb des Rotors angeordnet ist. Die Kupplungseinrichtung und die Betätigungseinrichtung können in Erstreckungsrichtung einer Drehachse der Kupplungseinrichtung hintereinander angeordnet sein. Die Betätigungseinrichtung kann auf einer der Brennkraftmaschine zugewandten Seite angeordnet sein. Die Kupplungseinrichtung kann auf einer der Getriebeeinrichtung zugewandten Seite angeordnet sein.

Mithilfe der Betätigungseinrichtung kann die Anpressplatte der Kupplungseinrichtung axial verlagerbar sein. Mithilfe der Betätigungseinrichtung kann die Kupplungseinrichtung geöffnet oder geschlossen werden. Mithilfe der Betätigungseinrichtung kann die Kupplungseinrichtung eingerückt oder ausgerückt werden.

Mit der erfindungsgemäßen Kupplungseinrichtung kann die Brennkraftmaschine mit dem Antriebsstrang verbunden oder von dem Antriebsstrang getrennt werden. Die Brennkraftmaschine kann mit der elektrischen Maschine, insbesondere mit dem Rotor, verbunden oder von der elektrischen Maschine, insbesondere von dem Rotor, getrennt werden. Die Brennkraftmaschine kann mit der Getriebeeinrichtung, insbesondere mit der Getriebeeingangswelle, verbunden oder von der Getriebeeinrichtung, insbesondere von der Getriebeeingangswelle, getrennt werden. Es wird ein nur geringer Bauraum benötigt. Es wird ein vorhandener Bauraum auf optimierte Weise genutzt.

Die Betätigungseinrichtung kann eine Rampeneinrichtung mit ersten Rampen und zweiten Rampen aufweisen und aufweisen. Die Betätigungseinrichtung kann selbstverstärkend sein. Damit ist eine Schaltung einer vergleichsweise hohen Arbeitsleistung mit einer vergleichsweise geringen Betätigungskraft ermöglicht. Es kann eine Betätigungskraft selbstverstärkt sein. Damit ist eine verringerte Betätigungsenergie erforderlich, um die Kupplungseinrichtung ein- und/oder auszurücken. Es ist eine verringerte Betätigungskraft erforderlich. Es ist ein verringerter Betätigungsweg erforderlich. Ein Aktuator kann eine verringerte Leistung aufweisen. Ein Aktuator kann eine verringerte Leistungsaufnahme aufweisen. Ein Aktuator kann einen verringerten Bauraum aufweisen. Ein Aktuator kann ein verringertes Gewicht aufweisen. Eine Schaltgeschwindigkeit kann erhöht sein. Die Rampeneinrichtung kann ausgehend von einer Bewegung in Umfangsrichtung der Kupplungseinrichtung eine Bewegung in Erstreckungsrichtung der Drehachse der Kupplungseinrichtung ermöglichen. Die Rampeneinrichtung kann axial wirksam sein.

Zwischen den ersten Rampen und den zweiten Rampen können Wälzkörper, insbesondere Kugeln, angeordnet sein. Die Rampen können Laufflächen für die Wälzkörper bilden. Die Rampen können als Wälzkörperrampen, insbesondere als Kugelrampen, ausgebildet sein. Die Rampen können in Umfangsrichtung der Kupplungseinrichtung verteilt angeordnet sein. Die Rampen zu einer zur Drehachse der Kupplungseinrichtung senkrechten Ebene schief sein. Die Rampen können in Umfangsrichtung der Kupplungseinrichtung ansteigen und/oder abfallen. Die Rampen können einseitig ansteigend sein. Die Rampen können beidseitig ansteigend sein. Die ersten Rampen und die zweiten Rampen können zueinander geometrisch komplementär ausgebildet sein. Die ersten Rampen können mit den zweiten Rampen derart korrespondieren, dass sich bei einer Bewegung der ersten Rampen und der zweiten Rampen in Umfangsrichtung der Kupplungseinrichtung relativ zueinander die ersten Rampen und die zweiten Rampen in Erstreckungsrichtung der Drehachse der Kupplungseinrichtung voneinander weg oder aufeinander zu bewegen. Die ersten Rampen können die Wälzkörper von radial innen stützen. Die zweiten Rampen können die Wälzkörper von radial außen stützen. Die Wälzkörper können einen derartigen Durchmesser aufweisen, dass sie zwischen den ersten Rampen und den zweiten Rampen verliersicher gehalten sind. Die Wälzkörper können in einem Wälzkörperkäfig angeordnet sein. Damit ist eine gleichmäßige Zuordnung der Wälzkörper zu den Rampen gewährleistet.

Die Betätigungseinrichtung kann ein Umlaufrädergetriebe mit einem Hohlrad, einem Sonnenrad, Planetenrädern und einem Steg aufweisen. Das Umlaufrädergetriebe kann ein Planetengetriebe sein. Das Hohlrad kann eine Innenverzahnung aufweisen. Das Sonnenrad kann eine Außenverzahnung aufweisen. Die Planetenräder können jeweils eine Außenverzahnung aufweisen. Die Planetenräder können mit dem Hohlrad und dem Sonnenrad in Eingriff stehen. Das Umlaufrädergetriebe kann eine erste Getriebewelle, eine zweite Getriebewelle und dritte Getriebewelle aufweisen. Das Hohlrad kann an der ersten Getriebewelle angeordnet sein. Das Sonnenrad kann an der zweiten Getriebewelle angeordnet sein. Die Planetenräder können an den dritten Getriebewellen angeordnet sein. Die erste Getriebewelle und die zweite Getriebewelle können koaxiale Achsen aufweisen. Die Achsen der dritten Getriebewellen können zu den Achsen der ersten Getriebewelle und der zweiten Getriebewelle parallel und von diesen beabstandet sein. Bei einem Betrieb des Umlaufrädergetriebes können die Planetenräder um das Sonnenrad umlaufen. Der Steg kann ein Planetenträger sein. Der Steg kann die dritten Getriebewellen miteinander fest verbinden oder die dritten Getriebewellen aufweisen.

Bezüglich der Rampeneinrichtung können die ersten Rampen dem Steg und die zweiten Rampen dem Hohlrad zugeordnet sein. Die ersten Rampen können zunächst baulich gesondert und nachfolgend mit dem Steg verbunden sein. Die ersten Rampen können in den Steg integriert sein. Die ersten Rampen können Abschnitte des Stegs sein. Die zweiten Rampen können zunächst baulich gesondert und nachfolgend mit dem Hohlrad verbunden sein. Die zweiten Rampen können in das Hohlrad integriert sein. Die zweiten Rampen können Abschnitte des Hohlrads sein.

Die Kupplungseinrichtung kann eine Anpressplatte aufweisen und das Hohlrad kann der Anpressplatte zugeordnet sein. Die Anpressplatte kann begrenzt axial verlagerbar sein. Das Hohlrad kann zunächst baulich gesondert und nachfolgend mit der Anpressplatte verbunden sein. Das Hohlrad kann mit der Anpressplatte formschlüssig, kraftschlüssig, insbesondere reibschlüssig, und/oder stoffschlüssig verbunden sein. Das Hohlrad kann in die Anpressplatte integriert sein. Das Hohlrad kann mit einem Abschnitt der Anpressplatte gebildet sein.

Die Betätigungseinrichtung kann einen elektrischen Aktuator aufweisen, der auf das Sonnenrad wirkt. Mithilfe des Aktuators kann das Sonnenrad mit einem Vorsteuermoment beaufschlagbar sein. Mithilfe des Aktuators kann das Sonnenrad mit einem einer Drehung des Umlaufrädergetriebes entgegen wirkenden Moment derart beaufschlagbar sein, dass sich der Steg mit den ersten Rampen und das Hohlrad mit den zweiten Rampen relativ zueinander verdrehen. Die Betätigungseinrichtung kann einen elektrischen Aktuator aufweisen, der auf den Steg wirkt. Mithilfe des Aktuators kann der Steg mit einem Vorsteuermoment beaufschlagbar sein. Mithilfe des Aktuators kann der Steg mit einem einer Drehung des Umlaufrädergetriebes entgegen wirkenden Moment derart beaufschlagbar sein, dass sich der Steg mit den ersten Rampen und das Hohlrad mit den zweiten Rampen relativ zueinander verdrehen. Die Betätigungseinrichtung kann einen elektrischen Aktuator aufweisen, der auf das Hohlrad wirkt. Mithilfe des Aktuators kann das Hohlrad mit einem Vorsteuermoment beaufschlagbar sein. Mithilfe des Aktuators kann das Hohlrad mit einem einer Drehung des Umlaufrädergetriebes entgegen wirkenden Moment derart beaufschlagbar sein, dass sich der Steg mit den ersten Rampen und das Hohlrad mit den zweiten Rampen relativ zueinander verdrehen. Der Aktuator kann eine Bremse sein. Der Aktuator kann eine Wirbelstrombremse sein. Zur Ansteuerung der Wirbelstrombremse kann eine elektrische Steuereinrichtung vorgesehen sein.

Die Kupplungseinrichtung kann zwischen einer vollständig offenen Betätigungsstellung, Zwischenstellungen und einer vollständig geschlossenen Betätigungsstellung geregelt verstellbar sein. Eine geregelte Verstellung kann mithilfe einer Steuereinrichtung erfolgen. Von der Steuereinrichtung kann wenigstens ein Ausgangssignal ausgebbar sein. Von der Steuereinrichtung ein Ausgangssignal an den Aktuator der Kupplungseinrichtung ausgebbar sein.

Der Steuereinrichtung kann wenigstens ein Eingangssignal zur Verfügung stehen. In der Steuereinrichtung kann wenigstens ein Parameter hinterlegt sein. Mithilfe der Steuereinrichtung kann wenigstens ein Parameter ermittelbar sein. Das wenigstens eine Ausgangssignal kann auf Basis des wenigstens einen Eingangssignals, wenigstens eines hinterlegten Parameters und/oder wenigstens eines ermittelten Parameters generierbar sein.

Die Kupplungseinrichtung kann in der vollständig geschlossenen Betätigungsstellung selbstregelnd sein. Ein Vorsteuermoment zum Schließen der Kupplungseinrichtung kann von der Brennkraftmaschine aufgebracht sein. Der Steg des Umlaufrädergetriebes kann mit einem von der Brennkraftmaschine erzeugten Moment beaufschlagt sein. Damit kann die Kupplungseinrichtung in Schließrichtung beaufschlagt sein. Damit ist eine Betätigung der Kupplungseinrichtung mithilfe des elektrischen Aktuators nicht erforderlich, um die geschlossenen Betätigungsstellung beizubehalten. Eine elektrische Energie ist nicht erforderlich.

Die Betätigungseinrichtung kann eine Freilaufeinrichtung aufweisen. Die Freilaufeinrichtung kann einen Innenring und einen Außenring aufweisen. Die Freilaufeinrichtung kann Klemmkörper aufweisen. Die Klemmkörper können zwischen dem Innenring und dem Außenring wirken. Mithilfe der Freilaufeinrichtung kann ein Verdrehen von Innenring und Außenring relativ zueinander in einer ersten Drehrichtung ermöglicht und in einer zur ersten Drehrichtung entgegengesetzten zweiten Drehrichtung gesperrt sein. Der Innenring kann der ersten Welle oder Nabe der elektrischen Maschine zugeordnet sein. Der Außenring kann dem Steg des Umlaufrädergetriebes zugeordnet sein. Damit ist eine Selbstregelung der Betätigungseinrichtung nicht nur in der vollständig geschlossenen Betätigungsstellung der Kupplungseinrichtung, sondern auch in allen Zwischenzuständen der Kupplungseinrichtung ermöglicht. Es ist ein Schubbetrieb der Brennkraftmaschine ermöglicht. Insbesondere kann der Schubbetrieb über die Betätigung der Wirbelstrombremse realisiert werden. Hierzu muss wie beim Starten des Verbrennungsmotors ein Moment an der Wirbelstrombremse angelegt werden. Der Verbrennungsmotor wird dann mitgeschleppt und kann somit das Schubmoment übertragen.

Zusammenfassend und mit anderen Worten dargestellt ergibt sich somit durch die Erfindung unter anderem eine E-Clutch. Eine "E-Clutch" kann eine elektrisch betätigbare Kupplung sein. Die Kupplung kann in einem Rotor eines E-Motors eines Hybrids platziert sein. Die Kupplung kann ein Trennen bzw. Verbinden einer E-Maschine mit einem Verbrennungsmotor gewährleisten. Dabei können folgende Betriebszustände durch die Kupplung erreicht werden: bei reinem elektrischen Fahren kann die Kupplung offen und der Verbrennungsmotor von einem Antriebsstrang abgekoppelt sein (Verbrennungsmotor aus); wird mehr Leistung bzw. Moment benötigt, kann der Verbrennungsmotor durch teilweises Schließen der Kupplung über den E-Motor gestartet werden, die Kupplung kann in Schubbetrieb gehen, um den Verbrenner zu starten, das Moment, welches die Kupplung überträgt, soll in diesem Zustand exakt geregelt werden können, dies kann über einen elektrischen Aktuator mit variabel einstellbarem Moment geschehen; bei laufendem Verbrennungsmotor kann die Kupplung geschlossen sein, um das Moment des Verbrennungsmotors in den Antriebsstrang zu übertragen, in diesem Zustand kann die Kupplung selbstregelnd sein und keine elektrische Energie benötigen.

Nachfolgend wird ein Ausführungsbeispiel der Erfindung unter Bezugnahme auf Figuren näher beschrieben. Aus dieser Beschreibung ergeben sich weitere Merkmale und Vorteile. Konkrete Merkmale dieses Ausführungsbeispiels können allgemeine Merkmale der Erfindung darstellen. Mit anderen Merkmalen verbundene Merkmale dieses Ausführungsbeispiels können auch einzelne Merkmale der Erfindung darstellen.

Es zeigen schematisch und beispielhaft:
- Fig. 1: einen Antriebsstrang eines Kraftfahrzeugs mit einem parallelen Vollhybridantrieb und einer in dem Antriebsstrang angeordneten Kupplung und
- Fig. 2: eine in einen Rotor einer elektrischen Maschine integrierte Kupplung mit einer Betätigungseinrichtung für ein Kraftfahrzeug mit einem Hybridantrieb.

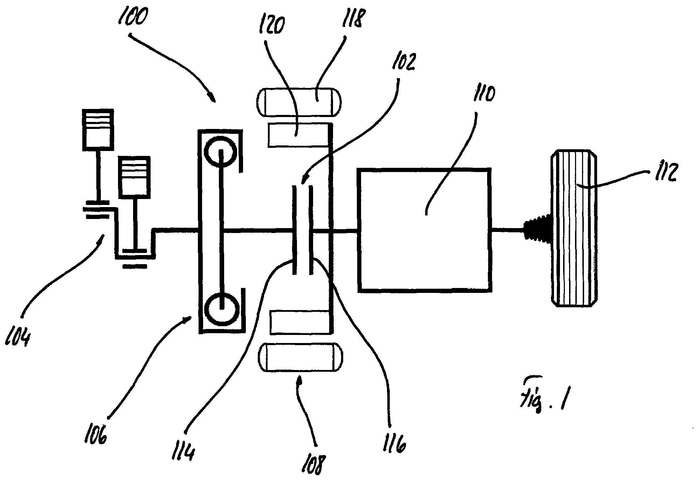

Fig. 1 zeigt einen Antriebsstrang 100 eines hier ansonsten nicht näher dargestellten Kraftfahrzeugs mit einem parallelen Vollhybridantrieb und einer in dem Antriebsstrang 100 angeordneten Kupplung 102. Der Antriebsstrang 100 weist eine Brennkraftmaschine 104, ein Zweimassenschwungrad 106, die Kupplung 102, eine elektrische Maschine 108, ein Getriebe 110 und wenigstens ein antreibbares Rad 112 auf. Die elektrische Maschine 108 ist als Motor betreibbar. Die Kupplung 102 ist in dem Antriebsstrang 100 zwischen dem Zweimassenschwungrad 106 und der elektrischen Maschine 108 angeordnet. Die Kupplung 102 ist in dem Antriebsstrang 100 zwischen dem Zweimassenschwungrad 106 und dem Getriebe 110 angeordnet.

Die Kupplung 102 weist ein Eingangsteil 114 und ein Ausgangsteil 116 auf. Das Eingangsteil 114 der Kupplung 102 ist mit dem Zweimassenschwungrad 106 verbunden. Das Ausgangsteil 116 der Kupplung 102 ist mit der elektrischen Maschine 108 verbunden. Die elektrische Maschine 108 weist einen Stator 118 und einen Rotor 120 auf. Das Ausgangsteil 116 der Kupplung 102 ist mit dem Rotor 120 der elektrischen Maschine 108 verbunden. Das Ausgangsteil 116 der Kupplung 102 ist mit dem Getriebe 110 verbunden. Die elektrische Maschine 108 ist mit dem Getriebe 110 verbunden. Der Rotor 120 der elektrischen Maschine 108 ist mit dem Getriebe 110 verbunden.

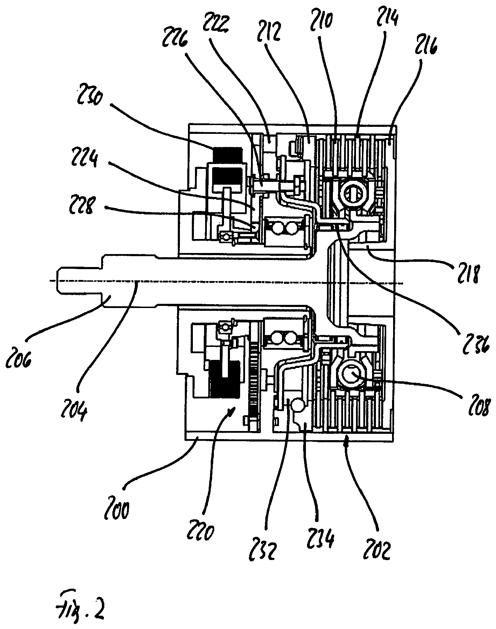

Fig. 2 zeigt eine in einen Rotor 200 einer hier ansonsten nicht näher dargestellten elektrischen Maschine integrierte Kupplung 202, wie Kupplung 102 gemäß Fig. 1, mit einer Betätigungseinrichtung 220 für ein Kraftfahrzeug mit einem Hybridantrieb.

Die Kupplung 202 ist in Erstreckungsrichtung der Drehachse 204 sowie in radialer Richtung innerhalb des Rotors 200 angeordnet. Die Kupplung 202 weist ein Eingangsteil und ein Ausgangsteil auf. Das Eingangsteil weist eine Welle 206, einen Momentfühler 208 und Kupplungsscheiben, wie 210, auf. Das Ausgangsteil der Kupplung 202 weist eine Anpressplatte 212, Zwischendruckplatten, wie 214, eine Druckplatte 216 und ein Nabenteil 218 auf. Die Kupplungsscheiben 210 sind drehfest mit der Welle 206 verbunden. Die Anpressplatte 212, die Zwischendruckplatten 214 und die Druckplatte 216 sind drehfest mit dem Nabenteil 218 verbunden. Die Anpressplatte 212, die Zwischendruckplatten 214 und die Druckplatte 216 sind drehfest mit dem Rotor 200 verbunden. Die Anpressplatte 212 ist in Erstreckungsrichtung der Drehachse 204 begrenzt axial verlagerbar.

Zur Betätigung der Kupplung 202 ist eine Betätigungseinrichtung 220 vorgesehen. Die Betätigungseinrichtung 220 ist in Erstreckungsrichtung der Drehachse 204 sowie in radialer Richtung innerhalb des Rotors 200 angeordnet. Mithilfe der Betätigungseinrichtung 220 ist die Anpressplatte 212 mit einer Betätigungskraft beaufschlagbar. Mithilfe der Betätigungseinrichtung 220 ist die Anpressplatte 212 axial verlagerbar. Die Betätigungseinrichtung 220 weist ein Planetengetriebe mit einem Hohlrad 222, Planetenrädern, wie 224, einem Steg 226 und einem Sonnenrad 228 auf. Das Hohlrad 222 weist eine Innenverzahnung auf. Das Sonnenrad 228 weist eine Außenverzahnung auf. Die Planetenräder 224 weisen jeweils eine Außenverzahnung auf und sind mit dem Hohlrad 222 und dem Sonnenrad 228 verzahnt. Der Steg 226 verbindet die Planetenräder 224. Das Sonnenrad 228 ist mithilfe einer Wirbelstrombremse 230 bremsbar. Die Betätigungseinrichtung 220 weist eine Rampeneinrichtung mit ersten Rampen, wie 232, und zweiten Rampen, wie 234, auf.

Die ersten Rampen 232 und die zweiten Rampen 234 sind über das Planetengetriebe miteinander verbunden. Die zweiten Rampen 234 sind an dem Hohlrad 222 angeordnet und über Blattfedern mit dem Rotor 200 der elektrischen Maschine verbunden. Die ersten Rampen 232 sind an dem Steg 226 des Planetengetriebes angeordnet. Über das Sonnenrad 228 kann ein Vorsteuermoment zur Betätigung der Kupplung 202 eingeleitet werden.

Bei einem rein elektrischen Betrieb des Kraftfahrzeugs ist die Kupplung 202 geöffnet. Das Hohlrad 222, der Steg 226 und das Sonnenrad 228 laufen mit gleicher Drehzahl. Diese Drehzahl entspricht der Drehzahl der elektrischen Maschine, das Planetengetriebe ist sozusagen "verblockt". Dadurch sind ein Verdrehen der ersten Rampen 232 und der zweiten Rampen 234 zueinander und damit eine Betätigung der Kupplung 202 unterbunden.

Soll eine mit der Welle 206 verbundene Brennkraftmaschine gestartet werden, wird durch eine Wirbelstrombremse 230 auf dem Sonnenrad 228 ein Vorsteuermoment für die Kupplung 202 erzeugt. Dieses Moment ist ein Bremsmoment und wirkt der oben beschriebenen Drehbewegung entgegen. Das Sonnenrad 228 wird relativ zum bisher "verblockten" Planetensatz verdreht. Über die Funktion des Planetensatzes werden die Planetenräder 224 und damit auch der Steg 226 relativ zum Rotor 200 und zum Hohlrad 222 verdreht, was zugleich einem Verdrehen der ersten Rampen 232 und der zweiten Rampen 234 relativ zueinander entspricht. Bei einer Verdrehung der ersten Rampen 232 und der zweiten Rampen 234 relativ zueinander verlagern sich die zweiten Rampen 234 in Erstreckungsrichtung der Drehachse 204 und die Anpressplatte 212 verlagert sich entsprechend. Die Kupplungsscheiben 210 werden zwischen der Anpressplatte 212, den Zwischendruckplatten 214 und der Druckplatte 216 eingeklemmt. Es erfolgt eine reibschlüssige Leistungsübertragung zwischen dem Eingangsteil und dem Ausgangsteil der Kupplung 202.

Das Vorsteuermoment der Wirbelstrombremse 230 wird durch eine zwischen dem Sonnenrad 228 und dem Steg 226 gebildete Übersetzung am Planetengetriebe und an den Rampen 232, 234 so übersetzt, dass die Brennkraftmaschine mit dem erforderlichen Moment gestartet werden kann. Das Vorsteuermoment kann über eine Stromzufuhr an der Wirbelstrombremse 230 exakt gesteuert und in kürzester Zeit aufgebaut werden. Die Startzeit der Brennkraftmaschine beträgt wenige Millisekunden. Durch die hohe Übersetzung des Moments und die kurze Betätigungszeit ergibt sich für das Starten der Brennkraftmaschine eine geringe Betätigungsenergie. Des Weiteren ist die Wirbelstrombremse 230 verschleißfrei und kann über ein Magnetfeld eines Elektromagnets beliebige Zwischenstufen des geforderten Moments, ohne Momentschwankungen und Reibwertabhängigkeiten, realisieren.

Bei laufender Brennkraftmaschine wird das Vorsteuermoment über die Brennkraftmaschine selbst und einen Freilauf 236 generiert. In diesem Betriebszustand überträgt die Kupplung 202 ein Zugmoment. Ein vorgegebener Anteil dieses Zugmoments wird über den Freilauf 236 als Vorsteuermoment für den Steg 226 genutzt. Damit wird die Kupplung 202 durch ein Teil des Moments der Brennkraftmaschine über die Rampen 232, 234 betätigt. Der Verdrehwinkel der Rampen 232, 234 wird über den Momentfühler 208 geregelt. Der Momentfühler 208 ermöglicht es außerdem, dass sich die Kupplung 202 wieder öffnet sobald kein Moment mehr anliegt. Durch diese Anordnung der Bauteile ist die Kupplung 202 in diesem Zustand selbstregelnd und benötigt keine weitere externe Energie zur Betätigung.

In diesem Zustand sind Betriebszustände wie Lastverschiebung, Boosten und Fahren mit der Brennkraftmaschine möglich. Ein Schubbetrieb der Brennkraftmaschine ist dem System ebenfalls möglich. Dabei wird die Rampeneinrichtung wieder über den Freilauf 236 betätigt und die Kupplung 202 kann ein gefordertes Schubmoment an den Verbrennungsmotor übertragen. Dabei muss zum Schließen der Kupplung die Wirbelstrombremse erneut (wie zuvor beim Starten des Verbrennungsmotors beschrieben) betätigt werden.

### Bezugszeichenliste

- 100: Antriebsstrang
- 102: Kupplung
- 104: Brennkraftmaschine
- 106: Zweimassenschwungrad
- 108: Maschine
- 110: Getriebe
- 112: Rad
- 114: Eingangsteil
- 116: Ausgangsteil
- 118: Stator
- 120: Rotor

- 200: Rotor
- 202: Kupplung
- 204: Drehachse
- 206: Welle
- 208: Momentfühler
- 210: Kupplungsscheibe
- 212: Anpressplatte
- 214: Zwischendruckplatte
- 216: Druckplatte
- 218: Nabenteil220 Betätigungseinrichtung
- 222: Hohlrad
- 224: Planetenrad
- 226: Steg
- 228: Sonnenrad
- 230: Wirbelstrombremse
- 232: Rampe
- 234: Rampe
- 236: Freilauf

## Patentansprüche

1. Elektrische Maschine (108) mit einem Stator (118) und einem Rotor (120) sowie einer Kupplungseinrichtung (102, 202) und einer Betätigungseinrichtung (220), die in den Rotor (120) integriert sind, für einen Antriebsstrang (100) eines Kraftfahrzeugs, **dadurch gekennzeichnet, dass** die Betätigungseinrichtung (220) ein Umlaufrädergetriebe mit einem Hohlrad (222), einem Sonnenrad (228), Planetenrädern (224) und einem Steg (226) aufweist.

2. Elektrische Maschine (108) nach Anspruch 1, **dadurch gekennzeichnet, dass** die Betätigungseinrichtung (220) eine Rampeneinrichtung mit ersten Rampen (232) und zweiten Rampen (234) aufweist.

3. Elektrische Maschine (108) nach Anspruch 2, **dadurch gekennzeichnet, dass** die ersten Rampen (232) dem Steg (226) und die zweiten Rampen (234) dem Hohlrad (222) zugeordnet sind.

4. Elektrische Maschine (108) nach einem der vorhergehenden Ansprüche, **dadurch gekennzeichnet, dass** die Kupplungseinrichtung (102, 202) eine Anpressplatte (212) aufweist und das Hohlrad (222) der Anpressplatte (212) zugeordnet ist.

5. Elektrische Maschine (108) nach einem der vorhergehenden Ansprüche, **dadurch gekennzeichnet, dass** die Betätigungseinrichtung (220) einen elektrischen Aktuator (230) aufweist, der auf das Sonnenrad (228) wirkt.

6. Elektrische Maschine (108) nach Anspruch 5, **dadurch gekennzeichnet, dass** mithilfe des Aktuators (230) das Sonnenrad (228) mit einem einer Drehung des Umlaufrädergetriebes entgegen wirkenden Moment derart beaufschlagbar ist, dass sich der Steg (226) mit den ersten Rampen (232) und das Hohlrad (222) mit den zweiten Rampen (234) relativ zueinander verdrehen.

7. Elektrische Maschine (108) nach einem der vorhergehenden Ansprüche, **dadurch gekennzeichnet, dass** die Kupplungseinrichtung (102, 202) zwischen einer vollständig offenen Betätigungsstellung, Zwischenstellungen und einer vollständig geschlossenen Betätigungsstellung geregelt verstellbar ist.

8. Elektrische Maschine (108) nach Anspruch 7, **dadurch gekennzeichnet, dass** die Kupplungseinrichtung (102, 202) in der vollständig geschlossenen Betätigungsstellung selbstregelnd ist.

9. Elektrische Maschine (108) nach einem der vorhergehenden Ansprüche, **dadurch gekennzeichnet, dass** die Betätigungseinrichtung (220) eine Freilaufeinrichtung (236) aufweist.

## Claims

1. Electric machine (108) having a stator (118) and a rotor (120) and also a clutch device (102, 202) and an actuation device (220), which are integrated into the rotor (120), for a drivetrain (100) of a motor vehicle, **characterized in that** the actuation device (220) has a planetary gear set with an internal gear (222), a sun gear (228), planet gears (224) and a planet carrier (226).

2. Electric machine (108) according to Claim 1, **characterized in that** the actuation device (220) has a ramp device with first ramps (232) and second ramps (234).

3. Electric machine (108) according to Claim 2, **characterized in that** the first ramps (232) are assigned to the planet carrier (226) and the second ramps (234) are assigned to the internal gear (222).

4. Electric machine (108) according to one of the preceding claims, **characterized in that** the clutch device (102, 202) has a pressure plate (212), and the internal gear (222) is assigned to the pressure plate (212).

5. Electric machine (108) according to one of the preceding claims, **characterized in that** the actuation device (220) has an electric actuator (230) which acts on the sun gear (228).

6. Electric machine (108) according to Claim 5, **characterized in that**, by means of the actuator (230), the sun gear (228) can be acted on with a torque, which counteracts a rotation of the planetary gear set, such that the planet carrier (226) with the first ramps (232) and the internal gear (222) with the second ramps (234) rotate relative to one another.

7. Electric machine (108) according to one of the preceding claims, **characterized in that** the clutch device (102, 202) is adjustable in regulated fashion between a fully open actuation position, intermediate positions and a fully closed actuation position.

8. Electric machine (108) according to Claim 7, **characterized in that** the clutch device (102, 202) is self-regulating in the fully closed actuation position.

9. Electric machine (108) according to one of the preceding claims, **characterized in that** the actuation device (220) has a freewheel device (236) .

## Revendications

1. Moteur électrique (108), avec un stator (118) et un rotor (120) ainsi qu'avec un dispositif d'accouplement (102, 202) et un dispositif d'actionnement (220) qui sont intégrés dans le rotor (120), pour une chaîne cinématique (100) d'un véhicule automobile, **caractérisé en ce que** le dispositif d'actionnement (220) présente un train épicycloïdal avec une roue à denture intérieure (222), une roue solaire (228), des roues planétaires (224) et une entretoise (226).

2. Moteur électrique (108) selon la revendication 1, **caractérisé en ce que** le dispositif d'actionnement (220) est un dispositif à rampes avec des premières rampes (232) et des deuxièmes rampes (234).

3. Moteur électrique (108) selon la revendication 2, **caractérisé en ce que** les premières rampes (232) sont affectées à l'entretoise (226), et les deuxièmes rampes (234) sont affectées à la roue à denture intérieure (222) .

4. Moteur électrique (108) selon l'une des revendications précédentes, **caractérisé en ce que** le dispositif d'accouplement (102, 202) présente une plaque de pression (212), et la roue à denture intérieure (222) est affectée à la plaque de pression (212).

5. Moteur électrique (108) selon l'une des revendications précédentes, **caractérisé en ce que** le dispositif d'actionnement (220) présente un actionneur électrique (230) qui agit sur la roue solaire (228).

6. Moteur électrique (108) selon la revendication 5, **caractérisé en ce que**, à l'aide de l'actionneur (230), la roue solaire (228) peut être exposée à un moment agissant à l'encontre d'une rotation du train épicycloïdal de telle sorte que l'entretoise (226) avec les premières rampes (232) et la roue à denture intérieure (222) avec les deuxièmes rampes (234) tournent l'une par rapport à l'autre.

7. Moteur électrique (108) selon l'une des revendications précédentes, **caractérisé en ce que** le dispositif d'accouplement (102, 202) peut être déplacé de façon réglée entre une position d'actionnement entièrement ouverte, des positions intermédiaires et une position d'actionnement entièrement fermée.

8. Moteur électrique (108) selon la revendication 7, **caractérisé en ce que** le dispositif d'accouplement (102, 202) est autorégulable dans la position d'actionnement entièrement fermée.

9. Moteur électrique (108) selon l'une des revendications précédentes, **caractérisé en ce que** le dispositif d'actionnement (220) présente un dispositif à roue libre (236).
